# EUROPEAN PATENT APPLICATION

(11) **EP 4 389 813 A1**
(43) Date of publication of application: **26.06.2024**
(21) Application number: 22215926.1
(22) Date of filing: 22.12.2022
(51) Int. Cl.: C08K 9/06, E04B 1/00, E04C 2/02, C08K 3/04, C08K 5/544

(54) **SHAPED OBJECTS BASED ON MODIFIED BIOCHAR AND A POLYMER AND METHODS FOR PRODUCING THEM**

(71) Applicant: Made of Air GmbH, 12053 Berlin (DE)
(72) Inventor: The designation of the inventor has not yet been filed
(74) Representative: Banse & Steglich Patentanwälte PartmbB

(57) **Abstract**

Subject of the invention is a method for producing a shaped object for construction applications, comprising the steps
(a) providing a biochar in particulate form, which has been subjected to an oxidation reaction,
(b) subjecting the biochar to a coupling reaction with a silane coupling agent,
(c) mixing the biochar with a polymer, and
(d) moulding the mixture.

The invention also relates to shaped objects and construction materials which are obtainable by the method, and to a biochar material.

## Description

The invention relates to a method for producing a shaped object for construction applications based on biochar and a polymer. The invention also relates to shaped objects, construction materials and a biochar material in particulate form.

### State of the art

Various approaches are presently suggested and investigated for controlling the carbon dioxide content in the atmosphere. One of the most relevant approaches is reducing the carbon dioxide content in the atmosphere by carbon (dioxide) sequestration and storage. For such approaches, it is important to provide functional materials which are on the one hand valuable and have high acceptance for users, and which are on the other hand suitable for efficient storage of carbon in large quantities. Construction materials, such as building materials, are of special relevance in this regard, because the construction sector is responsible for a large share of total worldwide carbon dioxide release. Construction materials are also used in high amounts and have the potential to store large quantities of carbon over long time periods.

Biochar (biochar) is produced by pyrolysis, which is the partial thermal degradation of biomass in an oxygen-controlled atmosphere. Biochar is widely used in agriculture to reduce runoff and increase soil fertility and crop yields. Since biochar is based on carbon from the atmosphere, it is a potentially interesting material for carbon sequestration and storage. Compared to other carbon storing organics such as carbohydrates, biochar displays a high recalcitrance, thereby preventing stored carbon from re-entering the atmosphere after decomposition. As demonstrated by a growing body of data, biochar can remain stable under normal environmental conditions for hundreds of years.

Until today, the use of biochar for permanent carbon storage in functional materials is limited, because biochar based materials have various drawbacks. It has been proposed in the art to include biochar as a filler in composite materials. However, biochar based composite materials are often not suitable for construction applications because of undesirable properties such as low mechanical, thermal or chemical resilience and highwater absorption.

For improving the stability of polymer composites, it has been suggested in the art to modify the surface of carbon-based fillers, for example with a coupling agent. Pongdong et al., "Influence of Filler from a Renewable Resource and Silane Coupling Agent on the Properties of Epoxidized Natural Rubber Vulcanizates", 2015, J. Chem., Article ID 796459, discloses a composite material based on epoxidized natural rubber and rice husk ash filler. The composite is produced by adding a mixture of the ash and a coupling agent to the rubber compounding formulation, and curing the formulation. The coupling agent is bis(triethoxysilylpropyl)tetrasulfide, which comprises sulfur and can thus support the vulcanization reaction. It is disadvantageous that the system is relatively complicated and requires a specific curing reaction. Epoxidized rubber and the sulfuric coupling agent are relatively complex and costly, and thus the composite is not suitable for large-scale applications. Further, vulcanized rubbers are elastic and have low thermal stability. There is no suggestion to use the composite for construction applications or permanent carbon storage.

US 2014/0329976 A1 relates to a composite based on a polymer and carbon-based filler, which comprises a hydrolysable silane having a cleavable aziridine group. In the working examples, a multi-wall carbon nanotube is coated with the cleavable silane compound in an ethanol-based solution. However, aziridine compounds are relatively complicated to manufacture and handle, because they can be degraded already under mild conditions. Therefore, such a filler and coating are not suitable for large-scale application. Uses for construction applications or permanent carbon storage are not disclosed.

CN 112143211 A relates to a composite based on a polyurethane elastomer, a charcoal fiber and an inorganic filler. The composite is prepared by mixing all components with a silane coupling agent, compounding and extrusion. Uses for construction applications are not disclosed and the properties of such materials could still be improved.

There is a continuous need for improved and efficient products and methods, which overcome the problems of the prior art outlined above.

### Problem underlying the invention

The problem underlying the invention is to provide materials and methods, which overcome the problems of the prior art outlined above.

The problem underlying the present invention is to provide improved materials for storing carbon sequestered from the atmosphere. The materials shall be suitable for construction applications, especially building applications, such that carbon can be stored in high amounts over long time periods.

It is a further problem of the invention to provide such materials which have high mechanical, thermal, and chemical stability. On the other hand, the materials shall be capable of including relatively high amounts of carbon. They should be easily available from conventional raw materials at moderate costs, and thus shall be suitable for mass production, such that a relevant effect for carbon sequestration can be achieved.

### Disclosure of the invention

Surprisingly, it was found that the problem underlying the invention is overcome by shaped objects, construction materials, biochar materials and methods according to the claims. Further embodiments of the invention are outlined throughout the description.

Subject of the invention is a method for producing a shaped object for construction applications, comprising in the order from (a) to (d) the steps
(a) providing a biochar in particulate form, which has been subjected to an oxidation reaction,
(b) subjecting the biochar to a coupling reaction with a silane coupling agent,
(c) mixing the biochar with a polymer, and
(d) moulding the mixture.

According to the method of the invention, a shaped object is produced. A shaped object is a three-dimensional object (body, part) having a defined form. The form is given to the object deliberately. Thus, it is not the result of a random process. For example, a shaped object could be a brick or panel, but not a powder or irregular granules. The shape is conferred to the object in moulding step (d). Accordingly, a plurality of the shaped objects can be produced which have the same shape.

The shaped object is for use in construction applications. Construction applications are especially applications in constructional engineering and architecture. They comprise building applications, but also infrastructure such as bridges or tunnels.

In step (a), a biochar is provided. Biochar is a lightweight carbon based material which is produced by pyrolysis of organic material, such as wood or other plant materials. Pyrolysis is partial thermal degradation of the biomass in an oxygen-controlled atmosphere. The biochar can be grinded or milled into fine powder. Preferably, the biochar is from wood. Biochar is also characterized by its high 13C isotope level, which distinguishes it from coal of fossil origin, and reaction products and derivatives thereof. Only biochar storage can contribute to carbon sequestration from the atmosphere. The use of biochar in the inventive method is advantageous for environmental reasons, because a large quantity of carbon which can be stored permanently in the composite material. An amount of 1 kg biochar contains approximately 680 to 820 grams of carbon, which is equivalent to about 2.5 to 3 kg carbon dioxide. When biochar is permanently stored in the composite material, the atmosphere can be depleted permanently from an equivalent amount of carbon dioxide. This can have a relevant environmental impact if biochar-based materials are used in construction applications in large amounts. Therefore, the inventive combination of a polymer material with biochar confers an advantageous environmental footprint to the construction material by allowing sequestration and permanent storage of carbon from the atmosphere in high amounts.

The shaped object of the invention is from a composite material. The polymer forms a matrix, in which the biochar particles are distributed. Thus, the biochar functions as a filler. In a preferred embodiment, the composite material comprises 25 to 90 wt.% biochar and 10 to 75 wt.% polymer. More preferably, the composite material comprises 30 to 85 wt.% biochar and 15 to 70 wt.% polymer; even more preferred 40 to 80 wt.% biochar and 20 to 60 wt.% polymer. It is especially preferred that the ratio of biochar in the composite is at least 30 wt.%, at least 50 wt.%, or at least 70 wt.%. In these embodiments, the polymer can confer stability to the composite. The environmental footprint can be especially advantageous when the biochar is included in relatively high amounts.

In a preferred embodiment, the biochar particles have an average particle size of 10 µm to 10 mm, preferably 50 µm to 5 mm, more preferably 100 µm to 1 mm. In a preferred embodiment, the biochar particles have particle sizes in the range between 10 µm and 10 mm, preferably 50 µm and 5 mm, more preferably 100 µm and 1 mm. Preferably, the particle sizes are determined in the method according to DIN ISO 2591-1:1988. Itwas found that such a biochar filler can provide composite shaped parts of high uniformity and strength.

The biochar provided in step (a) was subjected to an oxidation reaction. Typically, this oxidation reaction was carried out after the biochar had been generated from organic material. Accordingly, the oxidation reaction is distinct from the pyrolysis by which the biochar had been produced. In a preferred embodiment, the method comprises before step (a) a preceding step (a0) of subjecting the biochar to the oxidation reaction.

According to the invention, it was found that advantageously stable shaped objects for construction applications can be provided, if a specific biochar is used in step (a). In the art, biochar is obtained by pyrolysis at temperatures between about 200 °C to 900 °C. However, according to the invention it was found that a highly stable shaped object can be obtained, if the biochar was produced by pyrolysis at relatively low temperature. In a preferred embodiment, the biochar provided in step (a) was produced by pyrolysis at a temperature below 650°C, preferably below 550°C, more preferably at about 450°C. At such a low pyrolysis temperature, a specific biochar structure is generated, which is characterized by relatively low porosity and a specific surface structure. Typically, the surface comprises a relatively high level of aliphatic groups, and a relatively low level of aromatic groups. It was found that such a biochar can advantageously react with the silane coupling agent, thereby forming the stable shaped object of the invention. In contrast, if the pyrolysis temperature would be too high, the porosity could be higher, and the biochar surface would be characterized by increased crystallinity, higher carbon content and less functional groups.

Preferably, the biochar provided in step (a) has a relatively low porosity. Generally, porosity can be correlated to the specific surface area. In a preferred embodiment, the biochar, before subjecting it to the oxidation reaction, has a specific surface area between 75 and 500 m²/g, more preferably between 200 and 450 m²/g, most preferably between 300 and 400 m²/g, as determined according to the BET method of ISO 9277:2010. When adjusting the specific surface area accordingly, and subjecting the biochar subsequently to the oxidation reaction, a stable and advantageous composite material can be obtained. In another embodiment, the oxidized biochar provided in step (a), and thus after the oxidation reaction, has the specific surface area in the range defined above.

The pyrolyzed biochar which is provided in step (a) has been subjected to an oxidation reaction after biochar production by pyrolysis. In the oxidation reaction, the biochar is brought in contact with an oxidant under conditions such that the redox reaction can proceed. When the biochar is subjected to an oxidation reaction, a modified biochar is obtainable which comprises a high level of reactive functional groups at the surface. Typically, the functional groups comprise oxygen, such as hydroxyl groups, or carboxylic groups or keto groups. The effect can be even more pronounced when the biochar was pyrolyzed at low temperature, as outlined above. Thus, a biochar can be provided in step (a) which is characterized by a relatively high O/C ratio. In a preferred embodiment, the O/C ratio of the biochar provided in step (a) is not more than 0.6, preferably between 0.05 and 0.5, most preferably between 0.1 and 0.4, as determined according to DIN 51733. An O/C ratio in this range can be advantageous, because the biochar can be coupled strongly and conveniently to the silane coupling agent and form a highly stable composite material.

In a preferred embodiment, the biochar provided in step (a) was oxidized in the liquid phase in the presence of an oxidant. Preferably, the oxidant is selected from hydrogen peroxide, nitric acid, potassium permanganate, ammonium persulfate, ozone, phosphoric acid or sulfuric acid. It is especially preferred that the oxidant is hydrogen peroxide or nitric acid. An especially advantageous surface structure can be conferred to the biochar with these oxidants, such that the biochar can form strong bonds to the silane coupling agent. Accordingly, a stable shaped object is obtainable which is suitable for construction applications.

Preferably, the liquid is water, or at least comprises a solvent with a high-level of water, preferably more than 80 wt.% (based on the total amount of solvent). The use of water is preferable for cost and environmental reasons. For example, an aqueous solution of hydrogen peroxide or nitric acid can be used at a concentration of about 25 to 40 %, preferably 30 % to 35 %. Preferably, the oxidation reaction in liquid phase is carried out at elevated temperature, for example between 60 °C and 100 °C, preferably upon stirring. The biochar can be exposed to the oxidant for a suitable time range, for example between 1 and 10 hours, especially 2 to 6 hours.

In another preferred embodiment, the oxidation is carried out in the presence of a gaseous oxidant, preferably air or oxygen. An advantageous surface structure can be obtained when oxidizing the biochar surface in the gas phase with air or oxygen. Typically, oxidation in the gas phase is performed at elevated temperature, for example between 350 °C and 400 °C. Typically, the biochar starting material is subjected to an airflow at about 10 to 20 ml/min for about 10 to 60 minutes. The temperature can be increased during the oxidation, for example from room temperature to maximum temperature.

In step (b), the biochar which is provided in step (a) reacts with a silane coupling agent. In principle, silane coupling agents are known in the art. Silane coupling agents are bifunctional non-polymeric low-molecular weight compounds. They are used in the art to confer a desired property to the surface of a solid substrate. The silane coupling agent comprises a silane functional group for bonding it covalently to the substrate surface, a second functional group for conferring a functionality to the substrate surface after coupling, and a linker section.

In a preferred embodiment, the silane coupling agent comprises an alkoxy silane group. Such a group can be hydrolyzed in the presence of water upon formation of a silanol intermediate, which can be covalently linked to the biochar surface. In the inventive method, coupling agents with alkoxy silane groups can be attached effectively to the biochar. Typically, the alkoxy group is methoxy or ethoxy. Ethoxy silane groups are particularly preferred, because the hydrolysis rate in water is lower, and thus the coupling reaction can be controlled precisely.

In a preferred embodiment, the silane coupling agent comprises an amine group. Preferably, the amine group is a secondary or tertiary amine group, more preferably a tertiary amine group. It was found that in the inventive method, silane coupling agents with an amine group can provide a strong bond to polymers, especially polyamides. Moreover, probably because of their structure and properties in aqueous solution, silane coupling agents with amine groups, especially tertiary amine groups, can modify not only the biochar particle surface, but also the interior of biochar micropores in the inventive method. Thereby, a high degree of surface modification and strong bonds to the polymer can be achieved.

In a preferred embodiment, the silane coupling agent is an (aminoalkyl)trialkoxysilane, wherein the alkyl group comprises 1 to 4 carbon atoms and alkoxy is methoxy or ethoxy. In a preferred embodiment, the silane coupling agent is (3-aminopropyl)triethoxysilane (APTES). Such coupling agents are preferred, because they combine the advantageous properties of the trialkoxysilane group, especially triethoxysilane group, with the advantages of the amine group. Since the molecule is relatively small, no steric hindrance effects occur when it is bonded to the biochar, such that even the biochar micropore interior can be coated. Further, an advantageous rate of desirable hydrolysis and bonding, as compared to undesirable condensation of the silane coupling agent, can be achieved. When using such a reactive silane coupling agent, it is desirable that the predominant reaction is covalent bonding to the biochar surface. However, because of the high reactivity of silane coupling agents, undesirable side reactions can also occur. These comprise self-condensation and formation of oligomers or polymers in the reaction solution, which prevents these side products from reacting with biochar, and can greatly reduce the coupling efficiency.

Such amine group containing silane coupling agents can advantageously provide a dense coating on the surface of the biochar particles and within the micropore interior. Without being bound to theory, it is assumed that this is a result of low condensation rate and small molecule size, in combination with the oxidized biochar used in the present invention. It is another advantage of amino group silane coupling agents that they are highly stable in the presence of water. The specific coupling reaction can be controlled effectively by adding the catalyst, such as acid or base. Thus, the overall coupling system and reaction can be controlled conveniently, and the degree and distribution of coupling can be adjusted.

In another embodiment, a silane coupling agent is used which does not comprise an amine group. Instead, such a coupling agent may comprise a vinyl functional group, for example if the silane coupling agent is triethoxyvinylsilane (TEVS). However, such a coupling agent is less preferred, because self-condensation may occur, which can reduce the efficiency of the coupling reaction on the biochar surface.

Preferably, the silane coupling agent does not comprise a vinyl group, a cleavable group such as an aziridine group, or sulfur or a sulfuric group for vulcanization. Preferably, the silane coupling agent does not comprise a further reactive group apart from the amine group and silane group. Thus, the coupling agent can have a relatively simple structure, and can be handled and reacted in a relatively simple and convenient manner.

The coupling reaction in step (b) with the silane coupling agent is carried out in liquid phase, and thus in a composition which comprises a solvent. Preferably, the solvent is water, or at least comprises water. In a preferred embodiment, the solvent comprises at least 80 vol.%, more preferably at least 90 vol.%, water. Preferably, the composition comprises a catalyst, preferably an acid or base. In these embodiments, it is advantageous that no or only little organic solvent is required, which is desirable for cost and environmental reason. Further, the reaction in water can be controlled conveniently, especially with a catalyst and/or by adjusting the pH.

Typically, the coupling reaction in step (b) is carried out at elevated temperature, such as 50 °C to 100 °C, upon stirring for an appropriate time span, such as 1 to 48 hours. The pH of the solution is adapted to adjust the desired reaction rate. For example, the reaction can be efficient at a mild pH in the range of about 3 to 5, preferably 3.5 to 4. After the reaction is completed, the biochar can be filtered off and washed with water and/or ethanol, and dried, for example in an oven at elevated temperature. For the subsequent polymer compounding, it can be desirable that the biochar is provided in dry form.

In step (c) the biochar from step (b), which has been modified with the silane coupling agent, is mixed with a polymer. This mixture is moulded in step (d). The biochar functions as a filler in the product. In principle, the surface-modified biochar can be combined with various polymers, such as elastomers, thermoplastics or duromers. For example, the polymer can be a polyamide, polyolefin, such as polyethylene or polypropylene, polyester, polyurethane, silicone, acrylic polymer or rubber, or a copolymer or mixture thereof. Preferably, the polymer is a recycled and/or bio-based polymer, which is advantageous for the overall environmental balance. Preferably, the polymer is a synthetic polymer, which can be advantageous for efficient moulding.

In a preferred embodiment, the polymer in step (c) is a thermoplastic polymer. It was found that shaped objects can be provided efficiently when combining thermoplastic polymers with the modified biochar. When moulding and consolidating such a mixture, a stable shaped object can be obtained. For example, the thermoplastic polymer can be polyamide, polyolefine, acrylonitrile butadiene styrene (ABS) or polylactide, or mixture thereof. Preferably, the thermoplastic polymer is polyamide or polyolefine. It was found that shaped objects with high mechanical stability can be obtained with these thermoplastic polymers.

In a preferred embodiment, the polymer is polyamide, typically synthetic polyamide. Polyamides are characterized by repetitive amide bonds in the polymer chain. The polyamide can be aliphatic polyamide, polyphthalamide or aromatic polyamide. Preferably, the polyamide is aliphatic, such as PA6 or PA66. It was found that an advantageous shaped object can be obtained when combining polyamide with the modified biochar. Despite high levels of charcoal filler, shaped objects based on polyamide can have especially high stability. They are highly suitable for construction applications, which enable permanent and efficient carbon storage. In this regard, it is especially advantageous to combine a polyamide with biochar, which has been modified with a silane coupling agent comprising an amine group. The strong bond can also result from the use of oxidized biochar, as outlined above. Overall, highly stable objects for construction applications can be obtained from the compounds and by the means described above.

In another preferred embodiment, the polymer is polyolefine, such as polyethylene or polypropylene. The polyethylene can be HDPE (high density polyethylene). It was found that stable shaped objects can also be obtained from polyethylene. This is advantageous, because polyethylene is available in high amounts and at low costs, and can be recycled conveniently. Thus, respective materials are suitable for large scale building applications and permanent carbon storage.

The mixing in step (c) can be performed with conventional means, such as a static mixer or extruder. The mixture from step (c) is subjected to a moulding process in step (d). Polymer moulding devices and methods are known in the art. Typically, the mixture is heated such that it becomes a liquid or paste of desired viscosity, which is filled into the moulding form (the mould) and subjected to heat and pressure. After cooling, a moulded part is obtained, which is consolidated and removed from the mould. When a thermoplastic mixture is used, the moulded part becomes the shaped object after solidification and cooling. When a curable mixture is used, the moulded part is cured, typically by heating, to become the shaped object. Preferably, the form of the shaped object corresponds to the moulding form.

Subject of the invention is also a shaped object, which is obtainable by the method outlined above. Subject of the invention is also a shaped object comprising a polymer and biochar in particulate form, wherein the biochar has been subjected to an oxidation reaction after pyrolysis, wherein the oxidized biochar has been modified with a silane coupling agent.

The use of the composite material for preparing such shaped objects is highly advantageous, because they can be obtained easily, reliably and in large numbers by moulding. The shaped object (shaped part, shaped body) has a defined three-dimensional form, which can be purposively conferred to it in the moulding step. For example, the shaped object can have a length between 5 cm and 2 m, and a weight between 50 g and/or 10 kg, if desired. After moulding, the form can be modified, for example by cutting or polishing. The components and properties of the shaped object can be adjusted as outlined above for the method.

In a preferred embodiment, the shaped object comprises biochar which was pyrolyzed at a temperature below 600°C. Preferably, the specific surface area of the biochar is between 75 and 500 m²/g, determined according to the BET method of ISO 9277:2010. Preferably, the biochar has an O/C element ratio of not more than 0.6, as determined according to DIN 51733. In a preferred embodiment, the polymer is polyamide. In these embodiments, the biochar and polymer can be selected, obtained and processed as outlined above.

Subject of the invention is also a construction material, comprising the shaped object as outlined above. In a preferred embodiment, the shaped object is a panel, insulation board, building part or building block.

Typically, the shaped object is not porous. Preferably, it does not comprise open or closed pores in the polymer matrix. A non-porous material can be advantageous for storing a high amount of carbon. Moreover, the stability and barrier properties of a non-porous material can be high. However, the biochar particles typically comprises micropores, which have not been filled by the polymer. Thus, a relatively lightweight product can be obtained, when the ratio of biochar is high.

In a preferred embodiment, the shaped object comprises at least one additional filler or reinforcing agent such as fibers, which is not from biochar. It is preferred that additional fillers or reinforcing agents are also based on organic materials and have a good environmental footprint. Additional fillers could be added for modifying the properties, for example by including colour pigments or conductive particles. Fibres, such as glass or carbon fibres, can be added for increasing mechanical stability. Preferably, the amount of fillers and/or reinforcing agents is less than 20 wt.%, preferably less than 10 wt.%, for example in the range of 1 to 20 wt.% or 2 to 10 wt.%.

The composite material and shaped object may comprise at least one additive which is not a structural polymer, filler or reinforcing agent. For example, the additive can be selected from processing aids, plasticizers, colorants, flame retardants, thermal stabilizers and compatibilizers. Processing aids may improve workability during compounding or moulding. For example, the processing aid can be a fatty acid salt, such as calcium stearate, which is for example available under the trademark Ligastar from Peter Greven, DE. Such additives can also confer desired properties to the composite material and shaped part, such as colour or stability. Preferably, the amount of additives is up to 5 wt.% or up to 2 wt.%, for example in the range of 0.01 to 5 wt.% or 0.1 to 2 wt.%.

Preferably, the shaped object is rigid and stiff, and thus not elastic. Preferably, the tensile modulus is at least 2000 N/mm², more preferably between 2000 and 6000 N/mm², as determined according to ISO 527-1:2019. Rigid materials can be advantageous for construction applications because of their high dimensional stability. Preferably, the tensile strength according to ISO 527-1:2019 is high, for example >10 MPa, preferably >20 MPa, or even >30 MPa. Such a high tensile strength is advantageous for building applications, as the material can withstand mechanical stress. Preferably, the polymer is not a curable or cured polymer, such as rubber. Preferably, it does not comprise reactive groups for curing, such as vinyl or epoxy groups.

In a preferred embodiment, the shaped object is a construction material, i.e. a material used for construction. In preferred embodiments, the building material is a panel for walls, an insulation board, a building part, or a block for assembling building parts, such as walls, or a structural part. A panel is a flat object for covering a building part, such as a wall, floor or furniture surface. The use as a panel is advantageous because of the high stability of the composite material. Since the composite material can be mechanically, thermally and chemically stable, the panel can shield the substrate to which it is mounted.

Since the shaped object is for a construction application, it is not a filter, adsorptive, for example in soil or water cleaning, or catalyst. Thereby, the shaped object is different from respective materials based on char in the art, which are typically provided in powder form.

The construction material may comprise the shaped object and at least one further material. For example, it can be a laminate from two, three or more layers. In a preferred embodiment, the shaped object comprises a coating. For example, a functional coating can confer a desired property to the shaped object, such as colour, or may protect it against moisture, UV radiation, mechanical damage or weathering; or may confer a texture to the surface. Since biochar can confer a dark colour to the composite material, a coloured coating may be applied. Coatings can be applied by conventional means, such as liquid coating, for example with resins, impregnation, electron scattering (Trespa process), physical or chemical vapor deposition, lamination and the like. The coating may cover the shaped object completely or partially, for example only on one surface.

Subject of the invention is also a biochar material in particulate form, wherein the biochar has been subjected to an oxidation reaction after pyrolysis, wherein the oxidized biochar is modified with a silane coupling agent which comprises a tertiary amine group, wherein the biochar was pyrolyzed at a temperature below 600°C, wherein the specific surface area of the biochar before the oxidation reaction is between 75 and 500 m²/g, determined according to the BET method of ISO 9277:2010, wherein the biochar has an O/C element ratio of not more than 0.6 as determined according to DIN 51733. As outlined above, such a modified biochar is a useful filler for polymer compounds, especially for polyamide compounds, for producing shaped bodies having high stability, which are suitable for construction applications.

The inventive shaped objects, methods and construction materials solve the problem underlying the invention. A stable construction material is provided, which can be used as a carbon sink for long-term storage of carbon from the atmosphere. Overall, the shaped objects of the invention can have high mechanical and dimensional stability, even when they comprise relatively high amounts of charcoal filler.

Exemplified embodiments of the invention and aspects of the invention are shown in the figures.
Figure 1 shows a comparison of FT-IR results for the unmodified biochar substrate (dotted line, top), the biochar after oxidation with nitric acid (dotted line, middle), and the oxidized biochar after silane agent coupling (continuous line, bottom), as described in the working examples.
Figure 2 shows the results for thermal stability analysis by TGA of biochar before and after modification according to the working examples. The results are shown for the unmodified biochar substrate, the biochar after oxidation with nitric acid, and the oxidized biochar after silane coupling.

### Examples

### Example 1: Biochar oxidation

Biochar (BC) was used which had been produced at a low pyrolysis temperature (approx. 450°C) from woody lignocellulosic biomass. The biochar was sieved to standardize particle size distribution, with particles being in a range of 100 - 500 µm, and dried in an oven at 90°C for 24h.

The biochar was subjected to an oxidation reaction in order to increase the number of functional groups at the surface. The susceptibility of biochar to oxidation by air decreases as the pyrolysis temperature increases and more stable polyaromatic structures form. Acid and base oxidation were tested with the aim of finding the optimal method for biochar surface oxidation. The optimal method is defined as that which achieves the maximum amount of functional groups on the char's surface, increasing the chance of successful silane coupling in the subsequent coupling reaction.

The hydrogen peroxide treatment was performed in a beaker submerged in an oil bath with constant stirring at 80°C. The nitric acid treatment was performed under reflux. After treatment, the biochar samples were filtered and rinsed with deionized water until neutral pH and placed in an oven at 90°C overnight to dry. Air oxidized char was prepared in an oven with constant airflow, with a temperature ramp of 10-25°C/min and 30 min isotherm at the defined oxidation temperature. A summary of agents and oxidation conditions is provided in table 1.

**Table 1: Agents and conditions in oxidation reaction**

| Oxidizing Agent | Agent Concentration | BC to Solution Ratio (w/w) | Exposure Time | Exposure Temperature |
|---|---|---|---|---|
| H₂O₂ | 30% (w/w) | 5% | 5h | 80°C with stirring |
| HNO₃ | 35% (w/w) | 3% | 3h | 98°C with stirring |
| Air Oxidation | airflow 10-20ml/min | - | 45 min* | 350-400°C |

| | | | | |
|---|---|---|---|---|
| * 15 min increase from room temp to final oxidation temp + 30 min at oxidation temp | | | | |

### Example 2: Silane coupling reaction

6 g of the oxidized biochar, which was prepared according to example 1, was added to a reactor with 200 g deionized water and submerged in an oil bath at 78°C with constant stirring for 45 min to heat up. The pH is adjusted between about 3.5 and 4 for controlling the kinetics of the silane agent reaction. If required, the pH is adjusted by adding acetic acid dropwise. 1.5 g (3-aminopropyl)triethoxysilane (APTES) is dissolved at 5% (w/w) in organic solvent, such as ethanol or toluene, and the solution is then added to the biochar suspension. The silane coupling reaction was conducted for 20 - 24h in the oil bath with constant stirring. After treatment, the sample is filtered, washed with water and ethanol to remove excess silane agent, and dried in an oven at 70 - 100°C overnight. The amounts and conditions are summarized in table 2.

**Table 2: Conditions silane coupling reaction**

| Solvent to Water Ratio (w/w) | Agent to Substrate Ratio (w/w) | Solution pH | BC to Solution Ratio (w/w) | Immersion Time | Immersion Temperature |
|---|---|---|---|---|---|
| 10% | 25-50% | 3,5 | 0,5-5% | 20-24h | 78°C with stirring |

### Example 3: Characterization of modified biochars

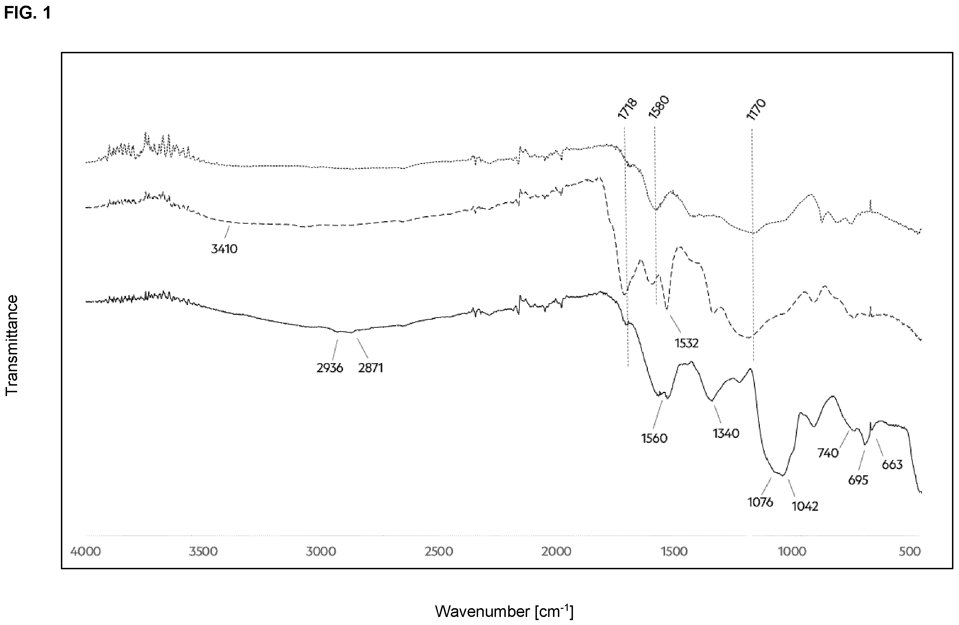

The introduction of functional groups on the biochar's surface was confirmed when samples prepared according to example 2 were tested with FT-IR. Fig. 1 shows a comparison of FT-IR results for the unmodified biochar substrate (dotted line, top), after oxidation treatment with nitric acid (dotted line, middle) and of the oxidized biochar after silane agent coupling (continuous line, bottom).

The FT-IR spectrum for the oxidized char presents an appearance of the C=O stretch at 1718 cm⁻¹, which is distinctive for carboxyl groups, validating the oxidation of the char through nitric acid treatment.

The spectra obtained after silane modification of the previously oxidized biochar confirm the presence of a grafted polysiloxane network on the biochar's surface. The spectrum shows the appearance of C-H stretch vibrations at 2936 and 2871 cm-1 corresponding to aliphatic -CH₂ groups in APTES. NH₂ scissoring appears at 1560 cm-1, a peak equivalent to Si-CH₂ at 1340 cm-1, Si-O bands at 1076 and 663 cm-1 and Si-O-C at 695 cm-1. Lastly, the peaks at 1042 cm-1 and 740 cm-1, are ascribed to Si-O-Si siloxy groups.

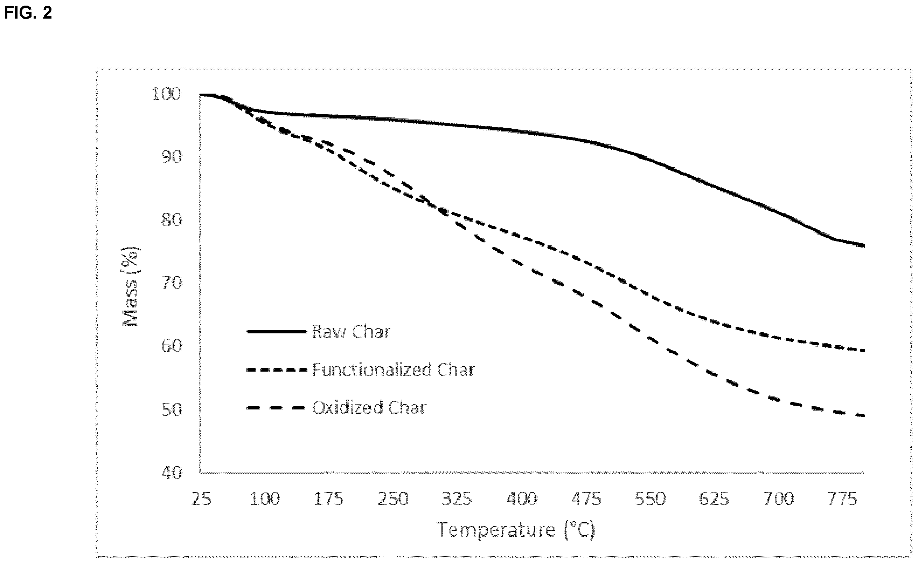

The thermal stability of biochar before and after modification was measured by TGA. The results are shown in Fig. 2 for the unmodified, biochar substrate, after oxidation with nitric acid and after subjecting the oxidized biochar to silane coupling. A basic temperature ramp was selected, where the samples were heated from 25 to 800°C at a rate of 10°C/min in the presence of air. After heating to 800°C, the raw biochar had experienced a weight loss of 24%, which is due to the combustion of free carbon, ash and volatile organic content present in the char. Oxidized char presents a weight loss of 51% proving an increased presence of functional groups. Lastly, the silane treated biochar suffers a slightly smoother decreasing trend than that of oxidized biochar, with a final 41% weight loss. The results indicate that the biochar surface has been modified significantly in the process outlined above, thereby providing advantageous properties for compounding with the polyamide or other polymers.

### Example 4: Preparation of shaped objects

Shaped objects were prepared from the surface functionalized biochar of example 2 and thermoplastic polymer, which was either polyamide 66 or high-density polyethylene. The char was first compounded with polyamide (PA66 ECO 1000/116, Altech) or high-density polyethylene (HDPE SHC7260, Braskem) in a Brabender PL 2100 kneader. The conditions are summarized in table 3:

**Table 3: Conditions for producing shaped objects**

| **Polymer Type and %** | **Biochar %** | **Lube Type and %** | **Load** | **Initial Temp.** | **Final Temp.** | **Speed** | **Melting Time** | **Total Kneading Time** |
|---|---|---|---|---|---|---|---|---|
| PA 65% | 35% | Ligastar 0.6% | 44.4g | 260°C (5 min) | 230°C (5 min) | 60 rpm | 2.5 min | 10 min |
| HDPE 65% | 35% | Ligastar 0.6% | 40.4g | 170°C | | 60 rpm | 4 min | 10 min |

Tensile test samples are created from a pressed plate, according to ISO 527-1:2019, and tested with a Quasar 25 Galdabini UTM.

### Example 5: Characterization of shaped objects

The samples for both HDPE with raw biochar, and HDPE with functionalized biochar, were subjected to tensile testing. A total of 5 samples was tested per compound to ensure reproducibility in the results, following the ISO 527 standard. The results are summarized in table 4.

**Table 4: Results HDPE composites**

| **Compound** | **Tensile Strength** | **Tensile Modulus** | **Elongation at Break** |
|---|---|---|---|
| HDPE + raw biochar | 11.9 ± 0.7 MPa | 2517.6 ± 128 MPa | 0.6 ± 0.1 % |
| HDPE + functionalized biochar | 13.4 ± 0.5 MPa | 2657.7 ± 174 MPa | 0.8 ± 0.1 % |
| Improvement | 12.6 % | 5.6 % | 33.3 % |

Further, the samples for both PA with raw biochar, and PA with functionalized biochar, were subjected to tensile testing. A total of 5 samples were tested per compound to ensure reproducibility in the results, following the ISO 527 standard. The results are summarized in table 5.

**Table 5: Results polyamide composites**

| **Compound** | **Tensile Strength** | **Tensile Modulus** | **Elongation at Break** |
|---|---|---|---|
| PA + raw biochar | 29.2 ± 4 MPa | 3012.2 ± 94.2 MPa | 1.2 ± 0.2 % |
| PA + functionalized biochar | 33.1 ± 3.9 MPa | 3017.5 ± 114 MPa | 1.3 ± 0.2 % |
| Improvement | 13.4 % | 0.2 % | 8.3 % |

The tensile strength of biochar particulate-filled polymer composites depends mainly on the interfacial adhesion between the matrix and the filler which helps in the transfer of a small section of stress to the filler particle at the time of deformation. For both studied matrixes, the use of silane agents as treatment for the biochar filler has a clear effect on the tensile properties due to its improvement in affinity and particle-matrix bonding, showing an increase in all tensile values in comparison to the non-treated composite.

Overall, the results demonstrate that the shaped objects of the invention have high mechanical and dimensional stability, although they comprise relatively high amounts of charcoal filler. The shaped objects meet the requirements for building applications and are suitable for permanent and efficient carbon storage.

## Claims

1. A method for producing a shaped object for construction applications, comprising the steps
(a) providing a biochar in particulate form, which has been subjected to an oxidation reaction,
(b) subjecting the biochar to a coupling reaction with a silane coupling agent,
(c) mixing the biochar with a polymer, and
(d) moulding the mixture.

2. The method according to claim 1, wherein the biochar in step (a) was pyrolyzed at a temperature below 600°C.

3. The method according to at least one of the preceding claims, wherein the biochar in step (a), before the oxidation reaction, has a specific surface area between 75 and 500 m²/g, as determined according to the BET method of ISO 9277:2010.

4. The method according to at least one of the preceding claims, wherein the oxidation reaction is carried out in the liquid phase in the presence of an oxidant, which is preferably selected from hydrogen peroxide, nitric acid, potassium permanganate, ammonium persulfate, ozone, phosphoric acid or sulfuric acid; and/or
wherein the oxidation reaction is carried out in the presence of a gaseous oxidant, preferably air or oxygen.

5. The method according to at least one of the preceding claims, wherein the O/C ratio of the biochar is not more than 0.6, determined according to DIN 51733.

6. The method according to at least one of the preceding claims, wherein the silane coupling agent comprises an amine group, preferably a tertiary amine group.

7. The method according to claim 6, wherein the silane coupling agent is (aminoalkyl)trialkoxysilane, wherein the alkyl group comprises 1 to 4 carbon atoms and the alkoxy group is a methoxy or ethoxy group, wherein the silane coupling agent is preferably (3-aminopropyl)triethoxysilane.

8. The method according to at least one of the preceding claims, wherein the polymer in step (c) is a thermoplastic polymer.

9. The method according to claim 8, wherein the thermoplastic polymer is a polyamide or polyethylene.

10. A shaped object, which is obtainable by a method of at least one of the preceding claims.

11. A shaped object comprising biochar in particulate form and a polymer, wherein the biochar has been subjected to an oxidation reaction after pyrolysis, wherein the oxidized biochar is modified with a silane coupling agent.

12. The shaped object of claim 10 and/or 11, wherein the biochar was pyrolyzed at a temperature below 600°C, and/or
wherein the specific surface area of the biochar before the oxidation reaction is between 75 and 500 m²/g, determined according to the BET method of ISO 9277:2010, and/or wherein the biochar has an O/C element ratio of not more than 0.6, as determined according to DIN 51733.

13. A construction material, comprising the shaped object according to at least one of claims 10 to 12.

14. The shaped object according to at least one of claims 10 to 12 or the construction material of claim 13, which is a panel, insulation board, building part or building block.

15. A biochar material in particulate form, wherein the biochar has been subjected to an oxidation reaction after pyrolysis, wherein the oxidized biochar is modified with a silane coupling agent which comprises a tertiary amine group, wherein the biochar was pyrolyzed at a temperature below 600°C, wherein the specific surface area of the biochar before the oxidation reaction is between 75 and 500 m²/g, determined according to the BET method of ISO 9277:2010, wherein the biochar has an O/C element ratio of not more than 0.6, as determined according to DIN 51733.
